# EUROPEAN PATENT SPECIFICATION

(11) **EP 0 744 278 B1**
(45) Date of publication and mention of the grant of the patent: **03.11.1999**
(21) Application number: 96107406.9
(22) Date of filing: 09.05.1996
(51) Int. Cl.: B29D 30/38, B29D 30/44

(54) **A tyre member preassembly machine**
Vorrichtung zum vorbereitenden Zusammensetzen von Reifenteilen
Dispositif d'assemblage préalable d'éléments de pneumatique

(30) Priority: 26.05.1995 JP 12847995
(43) Date of publication of application: 27.11.1996
(73) Proprietor: BRIDGESTONE CORPORATION, Tokyo 104-0031 (JP)
(72) Inventor: Ogawa, Yuichiro, Fuchu-shi, Tokyo (JP); Mukae, Makito, Higashimurayama-shi, Tokyo (JP)
(74) Representative: Görg, Klaus, Dipl.-Ing.

(56) References cited:
- EP-A- 0 246 497
- DE-B- 1 196 858
- US-A- 1 728 162
- US-A- 3 898 116
- US-A- 4 386 273
- US-A- 4 875 959
- PATENT ABSTRACTS OF JAPAN vol. 012, no. 021 (M-661), 22 January 1988 & JP-A-62 179932 (YOKOHAMA RUBBER CO LTD:THE), 7 August 1987,

## Description

### BACKGROUND OF THE INVENTION

### FIELD OF THE INVENTION

The present invention relates to a member preassembly machine, and particularly to a member preassembly machine which can form a tire efficiently in a single stage forming system.

### DESCRIPTION OF THE RELATED ART

The single stage forming system for manufacturing a green tire includes an individual server system and a preprocess preassembly system.

In the individual server system, an inner liner and a pair of sidewalls are separately wound around a forming drum and formed. The preprocess preassembly system is effected as a preprocess operation for a forming machine. In the preprocess preassembly system, a take-up device is used separately from a forming machine. After an inner liner and sidewalls have been respectively pulled out from their own reels and the transverse directions of the inner liner and the sidewalls have been guided to a predetermined setting width thereof, both the inner liner and the sidewalls are press-adhered and wound again by the take-up device.

However, in the individual server system, the ends of the inner liner are jointed by rotating a forming drum once while the inner liner cut at a predetermined length is being wound around the forming drum, and the ends of sidewalls are jointed by rotating the forming drum once while the sidewalls cut at a predetermined length are being wound around the forming drum.

Accordingly, it is necessary to rotate a forming drum twice, so that much time is needed for the winding operation in which the inner liner and the sidewalls are wound around the forming drum. Further, it is necessary to provide an inner liner cutter for cutting an inner liner at a predetermined length and a sidewall cutter for cutting sidewalls at a predetermined length. In addition, since an inner liner server and a sidewall server are provided in two stages, the equipments become large and the cost for the equipments becomes expensive.

On the other hand, in the preprocess preassembly system, an inner liner and a pair of sidewalls, which have been integrally press-adhered and wound again by a take-up device in advance, are wound around a forming drum. Accordingly, one rotation of the forming drum will do enough. Further, since the inner liner and the sidewalls can simultaneously be cut, a single cutter will do enough. However, this preprocess preassembly system has some drawbacks that more operators are needed because a single operator is not able to handle both a take-up device and a forming machine simultaneously. Further, the take-up device needs a unique carriage with large width. In addition, after the inner liner and the sidewalls have been wound by the take-up device, they are stored until they are wound around the forming drum, so that dimensions of the inner liner and the sidewalls may change due to the difference of the storage state of the inner liner and the sidewalls, especially due to the difference of the upper portion and the lower portion in the winding state thereof.

Further, the above-described system has other drawbacks in that when the winding operation for winding the inner liner and the sidewalls around the forming drum, is effected after the storage period has elapsed, it is difficult to discover inferior parts of the inner liner and the side walls. Therefore, feedback of the inferior parts may be delayed and the long elapsed time may be taken after the press-adhesion, so that the stripping of the inner liner and the sidewalls becomes difficult after the inferior parts have been discovered.

JP-A-62-179,932 proposes an apparatus for adhering a plurality of sheet materials together. This apparatus comprises two units for unrolling each sheet material, a plurality of detection sensors for detecting and positioning the peripheral edge portions in the transverse direction of each sheet material and a splice roll apparatus for pressing the adhered sections of each sheet material so as to join the widths together. As a result a wide sheet material is automatically produced by adhering each of the sheet materials.

Finally, according to EP 0 246 497 A3, a composite strip comprising an inner liner strip and a pair of sidewall strips is disclosed as an intermediate stage product for producing radial tires. In the corresponding method the inner liner strip and the pair of sidewall strips are put together and cut afterwards.

### SUMMARY OF THE INVENTION

In view of the aforementioned, it is an object of the present invention to provide a member preassembly machine which can efficiently form a tire.

In accordance with the present invention, there is provided a member preassembly machine, comprising:
inner liner pull-out means provided at the upstream side in a member transport direction of a forming drum;
inner liner centering means, provided at the downstream side in the member transport direction of the inner liner pull-out means, for guiding an inner liner which is pulled out by said inner liner pull-out means to a center of the position at which the inner liner is wound around the forming drum, wherein said inner liner centering means includes a guide conveyer and a pair of inner liner position sensors which are provided to correspond to sides of said guide conveyer and detect the deviation of a center line in the transverse direction of said inner liner from the referenced center of the position at which said inner liner is wound around the forming drum, and said guide conveyer is controlled based on the detected value;
sidewall pull-out means provided at the upstream side in the member transport direction of the forming drum;
sidewall centering means, provided at the downstream side in the member transport direction of the sidewall pull-out means, for guiding each of sidewalls which are pulled out by said sidewall pull-out means to a center of the position at which the sidewall is wound around at the forming drum;
overall transport means, provided at the downstream side of said inner liner centering means and said sidewall centering means, for transporting the inner liner and the sidewalls onto the forming drum in a state in which they are overlapped;
press-adhering means, provided on said overall transport means, for press-adhering the inner liner and the sidewalls; and
cutting means, provided at the downstream side of said press-adhering means in said overall transport means, for cutting the inner liner and the sidewalls simultaneously.

In the member preassembly machine according to the present invention, the inner liner wound by a reel or the like is pulled out by the inner liner pull-out means. The inner liner is guided by the inner liner centering member to the center of the position at which the inner liner is wound around the forming drum. At the same time, the sidewalls wound by a reel or the like are pulled out by the sidewall pull-out means. Each of the sidewalls is guided by the sidewall centering means to the center of the position at which the sidewall is wound around the forming drum. Next, the inner liner and the sidewalls are press-adhered each other by the press-adhering roller, while they are being transported by the overall transport means. The inner liner and the sidewalls are cut simultaneously by the cutting means at a predetermined length and are transported onto the forming drum provided at the downstream side in the member transport direction.

The above and other objects, features and advantages of the present invention will become apparent from the following description and the appended claims, taken in conjunction with the accompanying drawings in which preferred embodiments of the present invention are shown by way of illustrative example.

### BRIEF DESCRIPTION OF THE DRAWINGS

The invention will now be described with reference to the accompanying drawings wherein:
Fig. 1 is a schematic perspective view of a member preassembly machine according to an embodiment of the present invention; and
Fig. 2 is a schematic side view of a member preassembly machine according to the embodiment of the present invention.

### DESCRIPTION OF THE PREFERRED EMBODIMENTS

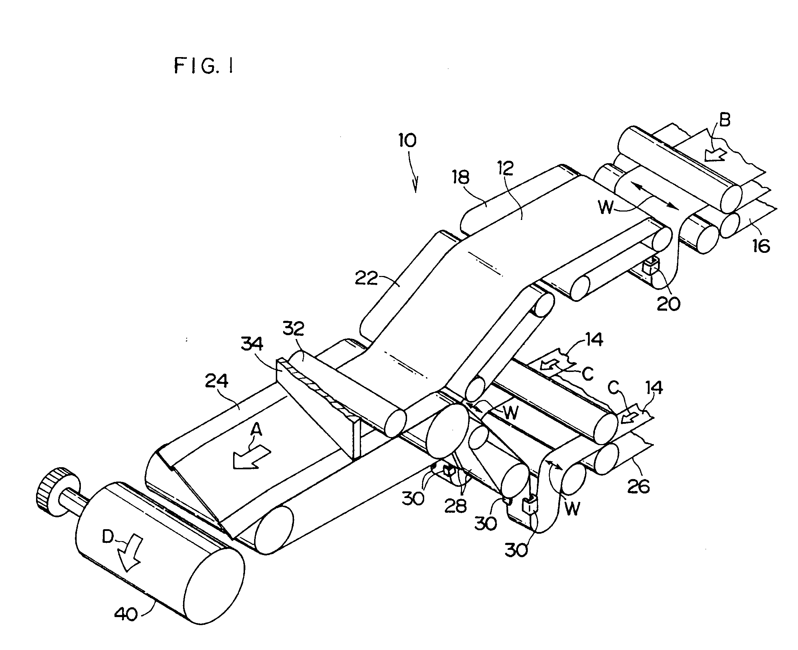

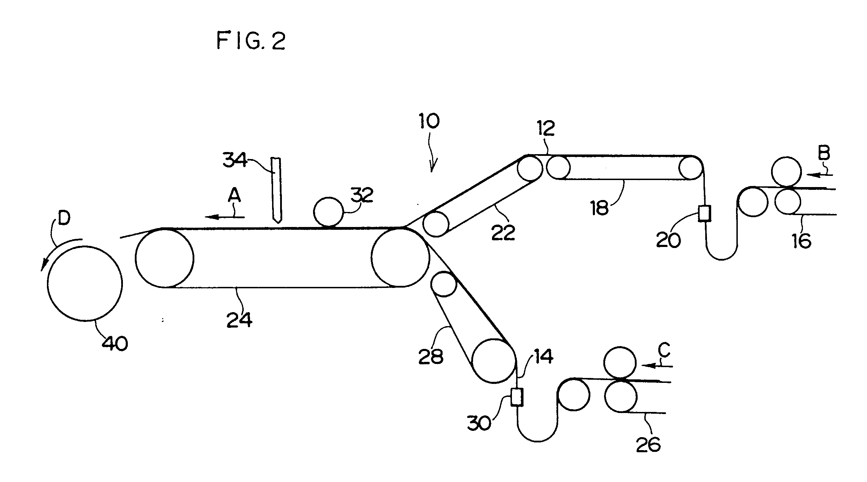

A description will be given of a member preassembly machine according to an embodiment of the present invention with reference to Figs. 1 and 2.

As shown in Fig. 1, a member preassembly machine 10 is provided with two transport paths having upper stage and lower stage. An upper transport path of the transport paths is an inner liner transport path for transporting an inner liner 12. A lower transport path of the transport paths is a sidewall transport path for transporting a pair of sidewalls 14.

The inner liner 12 is wound by an unillustrated reel from which the inner liner 12 is pulled out by an inner liner pull-out conveyer 16 serving as inner liner pull-out means.

The inner liner 12 has a slack of U-shaped configuration at the downstream side in the transport direction of the inner liner pull-out conveyer 16 (the direction of the arrow B in Fig. 1). A guide conveyer 18, which forms a part of inner liner centering means which moves the inner liner 12 in the transverse direction thereof (the direction of the arrow W in Fig. 1), is provided at the downstream portion in the transport direction of the inner liner pull-out conveyer 16. The mechanism of the guide conveyer 18 is well known, the description thereof is not given, accordingly.

A pair of inner liner position sensor 20, which form the other part of the inner liner centering means, are provided at the upstream side in the transport direction of the guide conveyer 18. The pair of inner liner position sensors 20 are provided to correspond to the sides of the guide conveyer 18. Further, the inner liner position sensors 20 detect the deviation of the center line in the transverse direction of the inner liner 12 from the referenced center of the position at which the inner liner 12 is wound around a forming drum. The outputs from the inner liner position sensors 20 are input to an unillustrated controller to which an operating device of the guide conveyer 18 is connected. Accordingly, if the inner liner position sensors 20 detect that the centerline in the transverse direction of the inner liner 12 is deviated from the referenced center of the position at which the inner liner 12 is wound around the forming drum, the guide conveyer 18 is controlled by a signal which is output from the controller to the operating device, so that the inner liner 12 is transported in the direction in which the deviation can be corrected. An inner liner transport conveyer 22 is provided at the downstream side in the transport direction of the guide conveyer 18. The inner liner transport conveyer 22 transports the inner liner 12 diagonally downward thereof. An overall transport conveyer 24 serving as overall transport means is provided at the downstream side in the transport direction of the inner liner transport conveyer 22.

A pair of sidewalls 14 are wound by unillustrated reels from which the sidewalls 14 are pulled out by a sidewall pull-out conveyer 26 serving as sidewall pull-out means. The sidewall 14 has a slack of U-shaped configuration at the downstream side in the transport direction of a sidewall pull-out conveyer 26 (the direction of the arrow C in Fig. 1). A pair of guide conveyers 28, which form a part of sidewall centering means for moving the sidewalls 14 in the transverse direction thereof (the direction of the arrow W in Fig. 1), are provided at the downstream portion in the transport direction of the sidewall pull-out conveyer 26. The mechanism of the guide conveyers 28 is well known, the description thereof is not given, accordingly.

Two pairs of sidewall position sensors 30, which form the other part of the sidewall centering means, are provided at the upstream side in the transport direction of the guide conveyers 28. Each pair of sidewall position sensors 30 are provided to correspond to the sides of each of the guide conveyers 28. Each pair of the sidewall position sensors 30 detect the deviation of the center line in the transverse direction of the sidewall 14 from the referenced center of the position at which the sidewall 14 is wound around a forming drum. The outputs from the sidewall position sensors 30 are input to unillustrated controller to which an operating device of the guide conveyers 28 is connected. Accordingly, if each pair of the sidewall position sensors 30 detect that the center line in the transverse direction of the sidewall 14 is deviated from the referenced center of the position at which the sidewall 14 is wound around the forming drum, each guide conveyer 28 is controlled by a signal which is output from the controller to the operating device, so that the sidewall 14 is transported in the direction in which the deviation can be corrected.

Further, the guide conveyer 28 is inclined to transport the sidewalls 14 diagonally upward thereof. The overall transport conveyer 24 serving as the overall transport means is provided at the downstream side in the transport direction of the guide conveyers 28.

At the end portion at the upstream side of the overall transport conveyer 24, edges of the inner liner 12 overlap respective one-side edges of the sidewalls 14. A press-adhering roller 32 serving as press-adhering means is provided at the intermediate portion of the overall transport conveyer 24. The inner liner 12 and the sidewalls 14 are press-adhered by the press-adhering roller 32.

An ultrasonic cutter 34 serving as cutting means is provided at the downstream side of the press-adhering roller 32. The inner liner 12 and the sidewalls 14 are cut simultaneously by the ultrasonic cutter 34 at a predetermined length and at a predetermined angle.

A forming drum 40 is provided near the end portion at the downstream side of the overall transport conveyer 24. The inner liner 12 and the sidewalls 14, which have been integrally press-adhered and transported onto the overall transport conveyer 24, can simultaneously be wound around the forming drum 40.

The arrow D in Fig. 1 shows the direction in which the forming drum 40 is rotated.

An operation of the present embodiment will be described, hereinafter:

In the member preassembly machine 10 of the present embodiment, the inner liner 12 wound by a reel or the like is pulled out by the inner liner pull-out conveyer 16. The inner liner 12 is transported in the direction of the arrow B in Fig. 2. If the inner liner position sensors 20 detect that the center line in the transverse direction of the inner liner 12 is deviated from the referenced center of the position at which the inner liner 12 is wound around the forming drum, the guide conveyer 18 is controlled to transport the inner liner 12 in a direction in which the deviation can be corrected, so that the center line in the transverse direction of the inner liner 12 is aligned to the referenced center of the position at which the inner liner 12 is wound around the forming drum.

Simultaneously, the pair of sidewalls 14 which are wound by reels or the like are pulled out by the sidewall pull-out conveyer 26 and transported in the direction of the arrow C in Fig. 2. If each pair of sidewall position sensors 30 detect that the center line in the transverse direction of each sidewall 14 is deviated from the referenced center of the position at which the sidewall 14 is wound around the forming drum, each guide conveyer 28 is controlled to transport the sidewall 14 in the direction in which the deviation can be corrected, so that the center line in the transverse direction of the sidewall 14 is aligned to the referenced center of the position at which the sidewall 14 is wound around the forming drum.

Next, the inner liner 12 and the sidewalls 14 are transported onto the overall transport conveyer 24. While the inner liner 12 and the sidewalls 14 are being transported by the overall transport conveyer 24 in the direction of arrow A in Fig. 2, they are press-adhered each other by the press-adhering roller 32 and cut simultaneously by the ultrasonic cutter 34 at the predetermined length and at the predetermined angle.

Thereafter, the inner liner 12 and the sidewalls 14, which have been integrally press-adhered and transported onto the overall transport conveyer 24, are simultaneously wound around the forming drum 40 by an operator. The forming drum 40 is provided near the end portion at the downstream side of the overall transport conveyer 24 and is rotated in the direction of arrow D in Fig. 2.

Accordingly, in accordance with the member preassembly machine 10 of the present embodiment, one rotation of the forming drum will do enough in the winding operation in comparison with that of the individual server system. The time required for the winding operation can thereby be shortened.

Further, in accordance with the member preassembly machine 10 of the present embodiment, because after the inner liner 12 and the sidewalls 14 have been press-adhered each other, they can simultaneously be cut, a single cutter will thereby do enough. Therefore, the manufacturing cost for the member preassembly machine can be reduced.

In addition, in accordance with the member preassembly machine 10 of the present embodiment, since the forming drum 40 is disposed near the downstream side of the member preassembly machine 10, the preassembly machine 10 and the forming drum 40 can be handled by a single operator. The number of operators can be reduced in comparison with that in the preprocess preassembly system.

Further, in accordance with the member preassembly machine 10 of the present embodiment, since the inner liner 12 and the sidewalls 14 which have been transported from the member preassembly machine 10 are sequentially wound around the forming drum 40, no storage period for storing the inner liner 12 and the sidewalls 14 is needed, so that the inner liner 12 and the sidewalls 14 will not change due to the lapse of time during the storage period. The dimensions of the parts in the inner liner and the sidewalls thereby will not change. In addition, when the inner liner 12 and the sidewalls 14 have any inferior points in their assembly or the like, they can be discovered in no time, so that the feedback of the process can be done speedily and the time which has gone by since the press-adhesion of the inner liner 12 and the sidewalls 14 is short. Therefore, the inner liner 12 and the sidewalls 14 can be modified easily.

Further, in accordance with the member preassembly machine 10 of the present embodiment, the upper transport path of the transport paths is the inner liner transport path for transporting an inner liner 12 and the lower transport path of the transport paths is the sidewall transport path for transporting side walls 14. Instead of them, the upper transport path of the transport paths may provide the sidewall transport path for transporting side walls 14 and the lower transport path of the transport paths may provide an inner liner transport path for transporting an inner liner 12. In addition, in accordance with the member preassembly machine 10 of the present embodiment, the ultrasonic cutter 34 is used as the cutting means. However, the cutting means is not limited to the ultrasonic cutter 34.

As the member preassembly machine of the present invention has the above-described structure, a tire can be formed efficiently. The machine is made compact and the manufacturing cost is thereby saved. The dimensions of the parts will not change due to the lapse of time and the machine is thereby modified easily. Accordingly, an excellent effect is obtained.

Further, it is to be understood that the present invention is not limited to each of the above-described embodiments and that various changes and modifications may be made.

## Claims

1. A member preassembly machine (10), comprising:
inner liner pull-out means (16) provided at the upstream side in a member transport direction of a forming drum;
inner liner centering means (18), provided at the downstream side in the member transport direction of the inner liner pull-out means (16), for guiding an inner liner (12) which is pulled out by said inner liner pull-out means (16) to a center of the position at which the inner liner (12) is wound around the forming drum, wherein said inner liner centering means includes a guide conveyer (18) and a pair of inner liner position sensors (20) which are provided to correspond to sides of said guide conveyer (18) and detect the deviation of a center line in the transverse direction of said inner liner (12) from the referenced center of the position at which said inner liner (12) is wound around the forming drum, and said guide conveyer (18) is controlled based on the detected value;
sidewall pull-out means (26) provided at the upstream side in the member transport direction of the forming drum;
sidewall centering means (28), provided at the downstream side in the member transport direction of the sidewall pull-out means (26), for guiding each of sidewalls (14) which are pulled out by said sidewall pull-out means (26) to a center of the position at which the sidewall (14) is wound around at the forming drum;
overall transport means (24), provided at the downstream side of said inner liner centering means (18) and said sidewall centering means (28), for transporting the inner liner (12) and the sidewalls (14) onto the forming drum in a state in which they are overlapped;
press-adhering means (32) provided on said overall transport means (24) and for press-adhering the inner liner (12) and the sidewalls (14); and
cutting means (34), provided at the downstream side of said press-adhering means (32) in said overall transport means (24), for cutting the inner liner (12) and the sidewalls (14) simultaneously.

2. A member preassembly machine according to claim 1, wherein said inner liner pull-out means is an inner liner pull-out conveyer (16).

3. A member preassembly machine according to claim 1, wherein said sidewall pull-out means is a sidewall pull-out conveyer (26) for pulling out a pair of said sidewalls (14).

4. A member preassembly machine according to claim 1, wherein said sidewall centering means includes a pair of guide conveyers (28) corresponding respectively to the pair of said sidewalls (14), and two pairs of sidewall position sensors (30) provided respectively at the pair of said guide conveyers (28).

5. A member preassembly machine according to claim 4, wherein each pair of said sidewall position sensors (30) detect the deviation of a center line in the transverse direction of each sidewall (14) from the referenced center of the position at which said sidewall (14) is wound around the forming drum, and each guide conveyer (28) is controlled based on the detected value.

6. A member preassembly machine according to claim 1, wherein said overall transport means is an overall transport conveyer (24).

7. A member preassembly machine according to claim 1, wherein said press-adhering means is a press-adhering roller (32).

8. A member preassembly machine according to claim 1, wherein said cutting means is an ultrasonic cutter (34).

## Patentansprüche

1. Element-Vormontage-Maschine (10) mit:
einer Zwischenlagen-Auszieheinrichtung (16), die an der stromaufwärtigen Seite in einer Element-Transportrichtung einer Formtrommel vorgesehen ist;
einer Zwischenlagen-Zentriereinrichtung (18), die an der stromabwärtigen Seite in der Element-Transportrichtung der Zwischenlagen-Auszieheinrichtung (16) vorgesehen ist, zum Führen einer Zwischenlage (12), die durch die Zwischenlagen-Auszieheinrichtung (16) ausgezogen wird, zu einer Mitte der Stelle, an der die Zwischenlage (12) um die Formtrommel gewickelt wird, wobei die Zwischenlagen-Zentriereinrichtung einen Führungsförderer (18) und ein Paar von Zwischenlagen-Positionssensoren (20) aufweist, die derart vorgesehen sind, daß sie Seiten des Führungsförderers (18) entsprechen und die Abweichung einer Mittellinie in der Querrichtung der Zwischenlage (12) von der Referenzmitte der Stelle, an der die Zwischenlage (12) um die Formtrommel gewickelt wird, aufweist, und wobei der Führungsförderer (18) anhand des erfaßten Wertes gesteuert wird;
einer Seitenwand-Auszieheinrichtung (26), die an der stromaufwärtigen Seite in der Element-Transportrichtung der Formtrommel vorgesehen ist;
einer Seitenwand-Zentriereinrichtung (28), die an der stromabwärtigen Seite in der Element-Transportrichtung der Seitenwand-Auszieheinrichtung (26) vorgesehen ist, zum Führen einer jeden der Seitenwände (14), die durch die Seitenwand-Auszieheinrichtung (26) ausgezogen werden, zu einer Mitte der Stelle, an der die Seitenwand (14) um die Formtrommel gewickelt wird;
einer Gesamt-Transporteinrichtung (24), die an der stromabwärtigen Seite der Zwischenlagen-Zentriereinrichtung (18) und der Seitenwand-Zentriereinrichtung (28) vorgesehen ist, zum Transportieren der Zwischenlage (12) und der Seitenwände (14) auf die Formtrommel in einem Zustand, in dem sie überlappt sind;
einer Druck-Hefteinrichtung (32), die an der Gesamt-Transporteinrichtung (24) und zum Druck-Heften der Zwischenlage (12) und der Seitenwände (14) vorgesehen ist; und
einer Schneideinrichtung (34), die an der stromabwärtigen Seite der Druck-Hefteinrichtung (32) in der Gesamt-Transporteinrichtung (24), zum Schneiden der Zwischenlage (12) und der Seitenwände (14) gleichzeitig, vorgesehen ist.

2. Element-Vormontage-Maschine nach Anspruch 1, wobei die Zwischenlagen-Auszieheinrichtung ein Zwischenlagen-Ausziehförderer (16) ist.

3. Element-Vormontage-Maschine nach Anspruch 1, wobei die Seitenwand-Auszieheinrichtung ein Seitenwand-Ausziehförderer (26) zum Ausziehen eines Paars von Seitenwänden (14) ist.

4. Element-Vormontage-Maschine nach Anspruch 1, wobei die Seitenwand-Zentriereinrichtung ein Paar von Führungsförderern (28), die jeweils dem Paar von Seitenwänden (14) entsprechen, und zwei Paare von Seitenwand-Positionssensoren (30) aufweist, die jeweils an dem Paar von Führungsförderern (28) vorgesehen sind.

5. Element-Vormontage-Maschine nach Anspruch 4, wobei jedes Paar von Seitenwand-Positionssensoren (30) die Abweichung einer Mittellinie in der Querrichtung einer jeden Seitenwand (14) von der Referenzmitte der Stelle, an der die Seitenwand (14) um die Formtrommel gewickelt wird, aufweist, und wobei jeder Führungsförderer (28) anhand des erfaßten Wertes gesteuert wird.

6. Element-Vormontage-Maschine nach Anspruch 1, wobei die Gesamt-Transporteinrichtung ein Gesamt-Transportförderer (24) ist.

7. Element-Vormontage-Maschine nach Anspruch 1, wobei die Druck-Hefteinrichtung eine Druck-Heftrolle (32) ist.

8. Element-Vormontage-Maschine nach Anspruch 1, wobei die Schneideinrichtung eine Ultraschall-Schneideinrichtung (34) ist.

## Revendications

1. Machine de préassemblage d'éléments (10), comportant :
des moyens d'extraction de revêtement intérieur (16) agencés du côté aval dans la direction de transport d'éléments d'un tambour de formation,
des moyens de centrage de revêtement intérieur (18), agencés du côté aval dans la direction de transport d'éléments des moyens d'extraction de revêtement intérieur (16), pour guider un revêtement intérieur (12) qui est extrait par lesdits moyens d'extraction de revêtement intérieur (16) vers le centre de la position dans laquelle le revêtement intérieur (12) est enroulé autour du tambour de formation, dans lequel lesdits moyens de centrage de revêtement intérieur comportent un convoyeur de guidage (18) et deux détecteurs de position de revêtement intérieur (20) qui sont agencés pour correspondre avec les côtés dudit convoyeur de guidage (18) et détecter la déviation de l'axe central dans la direction transversale dudit revêtement intérieur (12) à partir de l'axe de référence de la position dans laquelle ledit revêtement intérieur (12) est enroulé autour du tambour de formation, et ledit convoyeur de guidage (18) est commandé sur la base de la valeur détectée,
des moyens d'extraction de parois latérales (26) agencés du côté amont dans la direction de transport d'éléments du tambour de formation,
des moyens de centrage de parois latérales (28), agencés du côté aval dans la direction de transport d'éléments des moyens d'extraction de parois latérales (26), pour guider chacune des parois latérales (14) qui sont extraites par lesdits moyens d'extraction de parois latérales (26) vers le centre de la position dans laquelle la paroi latérale (14) est enroulée autour du tambour de formation,
des moyens de transport de la totalité (24), agencés du côté aval desdits moyens de centrage de revêtement intérieur (18) et desdits moyens de centrage de parois latérales (28), pour transporter le revêtement intérieur (12) et les parois latérales (14) sur le tambour de formation dans un état dans lequel ils se recouvrent,
des moyens de collage par pression (32) agencés sur lesdits moyens de transport de la totalité (24) et pour faire coller par pression le revêtement intérieur (12) et les parois latérales (14), et
des moyens de découpe (34), agencés du côté aval desdits moyens de collage par pression (32) desdits moyens de transport de la totalité (24), pour découper simultanément le revêtement intérieur (12) et les parois latérales (14).

2. Machine de préassemblage d'éléments selon la revendication 1, dans laquelle les moyens d'extraction de revêtement intérieur sont constitués d'un convoyeur d'extraction de revêtement intérieur (16).

3. Machine de préassemblage d'éléments selon la revendication 1, dans laquelle lesdits moyens d'extraction de parois latérales sont constitués d'un convoyeur d'extraction de parois latérales (26) destiné à extraire une paire dedites parois latérales (14).

4. Machine de préassemblage d'éléments selon la revendication 1, dans laquelle lesdits moyens de centrage de parois latérales comportent deux convoyeurs de guidage (28) correspondant respectivement aux deux parois latérales (14), et deux paires de détecteurs de position des parois latérales (30) agencées respectivement au niveau des paires dedits convoyeurs de guidage (28).

5. Machine de préassemblage d'éléments selon la revendication 4, dans laquelle chaque paire desdits détecteurs de position des parois latérales (30) détecte la déviation d'une ligne centrale dans la direction transversale de chaque paroi latérale (14) à partir de l'axe de référence de la position dans laquelle ladite paroi latérale (14) est enroulée autour du tambour de formation, et chaque convoyeur de guidage (28) est commandé sur la base de la valeur détectée.

6. Machine de préassemblage d'éléments selon la revendication 1, dans laquelle lesdits moyens de transport de la totalité sont constitués d'un convoyeur de transport de la totalité (24).

7. Machine de préassemblage d'éléments selon la revendication 1, dans laquelle lesdits moyens de collage sous pression sont constitués d'un rouleau de collage sous pression (32).

8. Machine de préassemblage d'éléments selon la revendication 1, dans laquelle lesdits moyens de découpe sont constitués d'un dispositif de découpe aux ultrasons (34).
